# EUROPÄISCHE PATENTSCHRIFT

(11) **EP 1 717 493 B1**
(45) Veröffentlichungstag und Bekanntmachung des Hinweises auf die Patenterteilung: **25.06.2008**
(21) Anmeldenummer: 06007463.0
(22) Anmeldetag: 24.04.2006
(51) Int. Cl.: F16J 9/06

(54) **Schraubendruckfeder für Ölabstreifkolbenringe**
Helical compression spring for oil scraping piston ring
Ressort de compression hélicoïdal pour segment racleur d'huile

(30) Priorität: 27.04.2005 DE 102005019500
(43) Veröffentlichungstag der Anmeldung: 02.11.2006
(73) Patentinhaber: Federal-Mogul Burscheid GmbH, 51399 Burscheid (DE); Innotec Forschungs- und Entwicklungs-GmbH, 95615 Marktredwitz (DE)
(72) Erfinder: Brillert, Hans-Rainer, 51399 Burscheid (DE); Mielke, Peter, 95632 Wunsiedel (DE)

(56) Entgegenhaltungen:
- EP-A- 0 551 566
- DE-A- 3 041 227
- DE-A- 3 213 807
- GB-A- 1 254 637

## Beschreibung

Die Erfindung betrifft ein Verfahren zur Herstellung einer für einen Ölabstreifkolbenring einsetzbaren Schraubendruckfeder sowie einen Ölabstreifkolbenring.

Bei mehrteiligen Ölabstreifkolbenringen mit Schraubendruckfedern, auch Schlauchfedern genannt, findet neben dem Verschleiß an der Lauffläche des Ölabstreifkolbenringes durch die ständige Reibung mit der Zylinderlauffläche während der Hubbewegung des Kolbens auch noch ein Verschleiß zwischen der Kontaktfläche der Schlauchfeder und der Aufnahmenut des Ölabstreifkolbenrings statt. Dieser Verschleiß erzeugt in der Nut Eingrabungen, in denen sich die Feder verhaken kann und so die notwendige radiale Bewegungsfähigkeit des Ölabstreifkolbenringes behindert oder sogar verhindert wird. Dieser Effekt kann bei einem Ölabstreifkolbenring zu unerwünschtem Anstieg des Ölverbrauches führen. Gleichzeitig findet auch ein Verschleiß an der Feder statt, durch die der Federdraht stark geschwächt wird.

Allgemein bekannte Maßnahmen gegen dieses Verschleißverhalten sind der Einsatz von so genannten "centerless" geschliffenen Federn, um die Flächenpressung zwischen Nut und Feder durch Vergrößerung der Kontaktfläche zu verringern, bzw. das Einführen eines Bereiches mit reduziertem Windungsabstand mit der Maßgabe, ebenfalls die Flächenpressung zwischen Nut und Feder zu reduzieren. Bei diesen "centerless" geschliffenen Federn ist der Windungsdurchmesser schon von Hause aus geschwächt, kommt bei solchen Federn noch die Schwächung durch den oben beschriebenen Verschleiß hinzu, kann es im Extremfall leicht zu einem Bruch der Feder und damit zu einem Totalausfall des Ölabstreifkolbenring-Feder-Systems kommen.

Die bislang wirkungsvollste Methode, den so genannten Sekundärverschleiß im genannten Bereich zu verhindern, ist die Trennung der metallischen Kontaktflächen durch einen Teflonschlauch, der über die Feder gezogen wird (siehe GB-A-1 254 637). Dieser Schlauch muss nicht einmal die gesamte Feder einhüllen, vielmehr reicht es aus, den Schlauch auf der Feder nur im Bereich des Ölabstreifkolbenringstoßes anzubringen, da hier der Verschleiß aufgrund der höchsten Relativbewegung zwischen Ring und Feder absolut am größten ist. Diese sehr gute Problemlösung mit dem Teflonschlauch stößt aber heute zunehmend an Grenzen der technischen Ausführbarkeit. Da die axialen Ringhöhen der Ölabstreifkolbenringe immer geringer werden (< 2 mm) müssen zwangsläufig auch die Windungsdurchmesser der Federn immer kleiner ausgebildet werden. Die Herstellung derart kleiner Windungsdurchmesser stellt an sich schon eine große Herauforderung dar, besteht doch zusätzlich noch die Forderung nach ausreichender Tangentialkraft. Um nun noch zusätzlich einen Teflonschlauch in dem begrenzten Bauraum der Nut unterzubringen, wäre es erforderlich, den Federdurchmesser mit allen beschriebenen Nachteilen noch weiter zu reduzieren. Darüber hinaus ist die Verfügbarkeit derart kleiner und dünner Teflonschläuche sehr schwierig, was sich letztendlich in hohen Herstellkosten widerspiegelt.

Versuche, die Federn direkt mit Teflon, Gleitlacken, Molybdändisulfid oder Ähnlichem auf einfachem Wege zu beschichten, z.B. durch Tauchverfahren, waren zur Lösung des beschriebenen Verschleißproblems ungeeignet.

Der EP-A 0 927 839 ist ein System zu entnehmen, bestehend aus einer aus einem Blechstreifen ausgestanzten Druckfeder in Wirkverbindung mit zwei ringförmig ausgebildeten Gleitelementen, wobei zumindest im Berührungsbereich der Druckfeder mit dem jeweiligen Gleitelement eine harte Beschichtung aus einem Gemisch von CrN und Cr₂N oder einem Gemisch aus CrN, Cr₂N und Cr vorgesehen ist. Zur Beschichtung einer Schraubendruckfeder eignet sich diese sehr harte Schicht nicht. Hinzu kommt, dass hierdurch nicht der im Federbett eines Ölabstreifkolbenringes auftretende Verschleiß vermeidbar ist.

Durch die DE 692 20 026 T2 ist ein Verfahren zur Herstellung von galvanisch beschichteten Federn bekannt geworden, das die folgenden Schritte umfasst: Abscheiden einer Kupferschicht auf dem Federdraht, Abscheiden einer Zinkschicht auf der Kupferschicht mit einem Dickenverhältnis der Zinkschicht zu der Gesamtdicke der Schichten der galvanischen Beschichtung von 5 bis 45 %, Regulieren der endgültigen Dicke der galvanischen Beschichtung auf 2 bis 25 µm, Formen des Drahts zu einer Feder und Glühen der galvanisch beschichteten Feder bei einer Temperatur von 250 bis 400°C.

Der Erfindung liegt die Aufgabe zugrunde, ein Verfahren zur Herstellung einer für einen Ölabstreifkolbenring einsetzbaren spiralförmig ausgebildeten Feder bereitzustellen, bei welchem bei Aufrechterhaltung der Tangentialkraft der Feder, über die Standzeit des Ölabstreifkolbenringes gesehen, das Verschleißverhalten zwischen Schraubendruckfeder und Federbett des Ölabstreifkolbenring verbessert ist, so dass auch bei reduzierter Bauhöhe eines Ölabstreifkolbenringes ein optimales Verschleißverhalten zwischen Ölabstreifkolbenring und Schraubendruckfeder gewährleistet.

Diese Aufgabe wird erfindungsgemäß durch die Merkmale der Patentansprüche 1 und 6 gelöst.

Vorteilhafte Weiterbildungen des Erfindungsgegenstandes sind den zugehörigen Unteransprüchen zu entnehmen.

Während Diamantschichten heutzutage vorzugsweise mittels Mikrowellen oder Heißdraht-CVD in Temperaturbereichen zwischen 600 und 1000°C in einer speziellen Gasatmosphäre erzeugt werden, kommt beim Erfindungsgegenstand vorteilhafterweise das PVD-Verfahren zur Anwendung, und zwar bei geringen Beschichtungstemperaturen, die zum Teil unterhalb von 200°C liegen. Beim Erfindungsgegenstand kommen bevorzugt Graphit-iC-Schichten zum Einsatz. Neben einem guten Verschleißschutz direkt auf der Schraubendruckfeder zeigen auch die mit den Windungen der Schraubendruckfeder in Kontakt befindlichen Nutbereiche des Ölabstreifkolbenrings einen drastisch verringerten Verschleiß.

Bekannte Verfahren, bei denen der Draht vor dem Wickeln zur Feder beschichtet wird, sind hier ungeeignet, da die harten Schichten die extremen Windungsverhältnisse, wie sie bei dieser speziellen Art von Federn auftreten, nicht aushalten, bzw. beim Arbeitgang "centerlessschleifen" gerade an den Wirkflächen wieder abgearbeitet würden.

Es wurde, einem weiteren Gedanken der Erfindung gemäß, ein Beschichtungsverfahren gewählt, bei dem die fertigen Schraubendruckfedern ausschließlich im Bereich der Windungsaußendurchmesser beschichtet werden. Hierbei ist es wiederum nur notwendig, eine Beschichtung am äußeren Bereich der geschlossenen Schraubendruckfeder vorzunehmen, da nur in diesem Bereich ein Kontakt - und somit Verschleiß - mit der Nut des Ölabstreifkolbenrings auftritt.

Als Federwerkstoffe sind heute für spiralförmig gewickelte Schraubendruckfeder eingesetzte Stahlqualitäten - CrSi-Stähle oder CrNi-Stähle - geeignet. Voraussetzung für eine anhaftenden Beschichtung ist, dass die Oberfläche der Federstähle durch geeignete Verfahren, wie beispielsweise chemisches Entgraten der Feder, blank- und oxidfrei hergestellt werden können.

Die Schraubendruckfedern können in Ölabstreiflcolbenring-Grundkörpern aus Gusswerkstoffen oder auch in solchen aus Stahl eingesetzt werden.

Der Erfindungsgegenstand ist anhand eines Ausführungsbeispiels in der Zeichnung dargestellt und wird wie folgt beschrieben. Es zeigen:
- Figur 1: Prinzipskizze eines mit einer spiralförmig ausgebildeten Schraubendruckfeder zusammenwirkenden Ölabstreifkolbenringes;
- Figur 2: Querschnitt durch den Ölabstreiflcolbenring gemäß Figur 1.

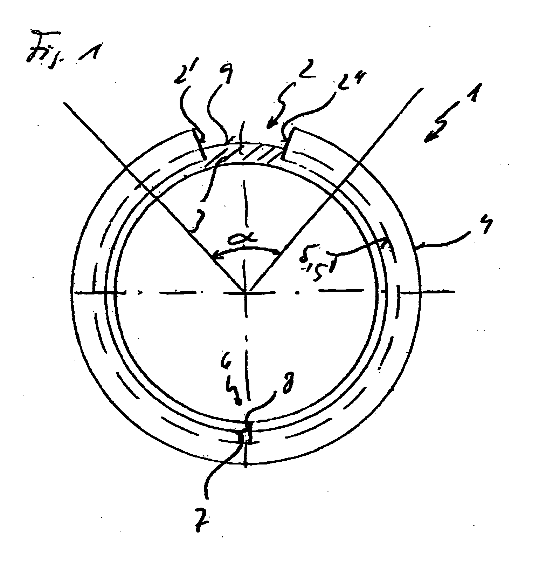

Figur 1 zeigt als Prinzipskizze einen Ölabstreifkolbenring 1, der über einen aufgeschnittenen Bereich, den so genannten Stoß 2 verfügt, und in Wirkverbindung mit einer spiralförmig gewickelten, in Kreisform gebogenen Schraubendruckfeder 3 steht. Der Ölabstreifkolbenring 1 verfügt über eine nur angedeutete Lauffläche 4 sowie eine der Lauffläche 4 abgewandte Nut 5, in welcher sich die Schraubendruckfeder 3 abstützt und nach Schließen des Stoßes 2 im Einbauzustand des Ölabstreifkolbenrings 1 eine radial nach außen wirkende Kraft auf den Ölabstreifkolbenring 1 ausübt, unter welcher er mit seiner Lauffläche 4 dann an einer nicht weiter dargestellten Gegenfläche, beispielsweise einer Zylinderlaufbuchse, anliegt. Die beim spiralförmigen Wickeln in länglicher Form erzeugte Schraubendruckfeder 3 wird in Kreisform gebracht, so dass sich die einander gegenüberliegenden Federenden 7,8 der Schraubendruckfeder 3 gegeneinander abstützen und zwischen den Federenden 7,8 kein realer Spalt 6 gegeben ist. Die Federenden 7,8 werden auf der dem Stoß 2 gegenüberliegenden Ringseite -hier mit Spalt 6 bezeichnet- vorgesehen. In der Praxis hat sich herausgestellt, dass ein Wandern der Schraubendruckfeder 3 in Umfangsrichtung eher nicht gegeben ist, so dass der Spalt 6 üblicherweise stationär an der dargestellten Stelle verbleibt. Bei dem in Figur 1 abgebildeten System, bestehend aus Ölabstreifkolbenring 1 und Schraubendruckfeder 3, findet neben dem Verschleiß an der Lauffläche 4 des Ölabstreifkolbenringes 1 durch die ständige Reibung mit der Zylinderlaufbahn während der Hubbewegung auch noch ein Verschleiß (Sekundärverschleiß) zwischen der Kontaktfläche 9 der Schraubendruckfeder 3 und der Nut 5 bzw. Federbettes 5' des Ölabstreifkolbenringes 1 statt. Dieser Verschleiß erzeugt im Federbett 5' Eingrabungen, in denen sich die Schraubendruckfeder 3 verhaken kann, so dass die radiale Beweglichkeit des Ölabstreiflcolbenringes 1 gestört wird. Im Bereich des Stoßes 2 ist über einen bestimmten Winkelbereich α links und rechts der Stoßenden 2',2" der Verschleiß zwischen Schraubendruckfeder 3 und Nut 5 aufgrund der hier gegebenen höchsten Relativbewegung zwischen Ölabstreifkolbenring 1 und Schraubendruckfeder 3 absolut am größten. Der Verschleiß reduziert sich links und rechts neben den bezeichneten Winkelbereich α in Richtung zu der Ringrückenseite sehr schnell gegen 0, da hier die Relativbewegung zwischen Ölabstreifkolbenring 1 und Schraubendruckfeder 3 eher nicht mehr gegeben ist.

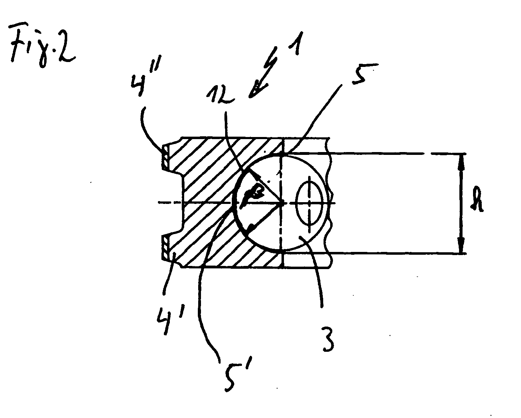

Die Figur 2 zeigt einen Querschnitt durch den in Figur 1 nur angedeuteten Ölabstreifkolbenring 1, beinhaltend die Schraubendruckfeder 3. Die Lauffläche 4 soll in diesem Beispiel gebildet werden durch zwei sich radial nach außen erstreckende Ansätze 4', die mit einer verschleißfesten Schicht 4" versehen sind. Die Höhe h des Ölabstreifkolbenringes 1 wird in diesem Beispiel mit 1,5 mm angenommen. Zur Aufnahme der Schraubendruckfeder 3 verfügt der Ölabstreifkolbenring 1 über ein Federbett 5'.

Durch ständige Absenkung der Gesamthöhe des Systems, bestehend aus Ölabstreifkolbenring 1 und Schraubendruckfeder 3, kommen immer kleinere Durchmesser d für die aus Draht bestehenden Schraubendruckfeder 3 zum Einsatz, wobei die Herstellung derart kleiner Windungsdurchmesser an sich bereits eine große technische Herausforderung darstellt. Zusätzlich ist noch die Forderung nach ausreichender radialer Spannkraft der Schraubendruckfeder 3 gegeben.

In diesem Beispiel soll die Schraubendruckfeder 3 im lediglich Bereich des Federbettes 5' in einem Winkelbereich β auf der äußeren Umfangsfläche 3' mit einer Beschichtung auf Basis einer verschleißfesten Graphitschicht 12 versehen werden. Zum Einsatz gelangt amorphes verschleißfestes Graphit auf Basis von Graphit-iC. In diesem Beispiel soll eine Multilayer-Metall-Kohlenstoffschicht in einem Niedertemperaturprozess (< 200°C) durch das PVD-Verfahren (Physikalische Dampfphasen Abscheidung) aufgebracht werden.

Die Schraubendruckfeder 3 wurde nach dem Wickeln in Spiralform am äußeren Umfang einem Materialabtrag durch das an sich bekannte "centerless"-Schleifen unterzogen. Erst nach dem Schleif- und Reinigungsprozess wird die Schraubendruckfeder beschichtet. Eine Beschichtung des Federdrahtes vor dem eigentlichen Wickeln der Schraubendruckfeder ist deshalb nicht möglich.

Je nach Ausgestaltung des Federbettes 5' mag es sinnvoll sein, die Graphitschicht 12 über den gesamten aktiven Kontaktbereich zwischen Schraubendruckfeder 3 und Federbett 5' vorzusehen oder lediglich im Winkelbereich α also lediglich im Bereich des Stoßes (2) des Ölabstreifkolbenringes 1.

## Patentansprüche

1. Verfahren zur Herstellung einer für einen Ölabstreifkolbenring (1), einsetzbaren Schraubendruckfeder (3), indem ein Draht spiralförmig gewickelt, anschließend einer Reinigung unterzogen und die so vorbereitete Schraubendruckfeder (3) zumindest partiell mit einer amorphen verschleißfesten Graphitschicht (12) versehen wird.

2. Verfahren nach Anspruch 1, **dadurch gekennzeichnet, dass** die amorphe Graphitschicht (12) in einem Niedertemperaturprozess in Temperaturbereichen. < 200°C auf die zu beschichtenden Umfangsbereiche (3') der Schraubendruckfeder (3) aufgebracht wird.

3. Verfahren nach einem der Ansprüche 1 bis 2, **dadurch gekennzeichnet, dass** vor der Beschichtung der Schraubendruckfeder (3) die äußere Umfangsfläche (3') derselben metallisch blank- bzw. oxidfrei vorgesehen, insbesondere chemisch entgratet wird.

4. Verfahren nach einem der Ansprüche 1 bis 3, **dadurch gekennzeichnet, dass** die amorphe Graphitschicht (12) als Graphit-iC-Schicht ausgebildet wird.

5. Verfahren nach einem der Ansprüche 1 bis 3, **dadurch gekennzeichnet, dass** die Graphitschicht im PVD- Verfahren aufgebracht wird.

6. Ölabstreifkolbenring für Verbrennungskraftmaschinen, der mit einer auf der Ringrückenfläche angeordneten radial nach außen spannenden Schraubendruckfeder zusammenwirkt, wobei die Schraubendruckfeder in einer als Federbett fungierenden Nut in der Ringrückenfläche sich erstreckt und deren Federenden sich gegenseitig in Umfangsrichtung abstützen und der Ölabstreiflcolbenring einen Stoß aufweist, **dadurch gekennzeichnet, dass** die Oberfläche (3') der Schraubendruckfeder (3) mit einer amorphen verschleißfesten Graphitschicht (12) versehen ist.

7. Ölabstreifkolbenring nach Anspruch 6, **dadurch gekennzeichnet, dass** die Schraubendruckfeder (3) mindestens im Bereich des Stoßes (2) in einem vorgebbaren Winkelbereich (α) beschichtet ist, wobei im Einbauzustand die Federenden (7,8) der Schraubendruckfeder (3) dem Stoß (2) gegenüberliegen.

8. Ölabstreifkolbenring nach Anspruch 6 bis 7, **dadurch gekennzeichnet, dass** der Winkelbereich (α) zwischen 5° bis 60° liegt.

9. Ölabstreiflcolbenring nach Anspruch 6, **dadurch gekennzeichnet, dass** die Schraubendruckfeder (3) mindestens auf der dem Federbett (5') zugekehrten Oberfläche (3') in einem vorgebbaren Winkelbereich (β) beschichtet ist.

10. Ölabstreifkolbenring nach Anspruch 9, **dadurch gekennzeichnet, dass** der Winkelbereich (β) etwa zwischen 5° bis 180° liegt.

11. Ölabstreifkolbenring nach den Ansprüche 8 bis 10, **dadurch gekennzeichnet, dass** die im Winkelbereich (β) angeordnete Graphitschicht (12) in Umfangsrichtung gesehen sich über den Winkelbereich (α) erstreckt.

12. Ölabstreifkolbenring nach mindestens einem der Ansprüche 6 bis 11, **dadurch gekennzeichnet, dass** die Graphitschicht (12) als Graphit iC-Schicht ausgebildet ist.

## Claims

1. Method for producing a helical compression spring (3) for use with an oil scraping piston ring (1) wherein a wire is helically wound, then subjected to cleaning and the helical compression spring (3) thus prepared is at least partially provided with an amorphous abrasion-resistant graphite layer (12).

2. Method according to claim 1, **characterised in that** the amorphous graphite layer (12) is applied in a low-temperature process at temperatures in the region < 200°C to the uncoated peripheral regions (3') of the helical compression spring (3).

3. Method according to one of the claims 1 to 2, **characterised in that** before the coating of the helical compression spring (3), the outer peripheral surface (3') thereof is provided bright and oxide free, in particular, chemically deburred.

4. Method according to one of the claims 1 to 3, **characterised in that** the amorphous graphite layer (12) is formed as a Graphit-iC layer.

5. Method according to one of the claims 1 to 3, **characterised in that** the graphite layer is applied using a PVD process.

6. Oil scraping piston ring for internal combustion engines which interacts with a helical compression spring which is disposed on the ring rear surface and presses radially outwardly, wherein the helical compression spring extends in a groove in the ring rear surface, said groove serving as a spring bed, and the ends of said spring are supported against one another in the peripheral direction and the oil scraping piston ring has a joint, **characterised in that** the surface (3') of the helical compression spring (3) is provided with an amorphous abrasion-resistant graphite layer (12).

7. Oil scraping piston ring according to claim 6, **characterised in that** the helical compression spring (3) is coated at least in the region of the joint (2) in a predeterminable angular region (α) wherein, in the installed condition, the ends (7, 8) of the helical compression spring (3) lie opposing the joint (2).

8. Oil scraping piston ring according to claim 6 to 7, **characterised in that** the angular region (α) lies between 5° and 60°.

9. Oil scraping piston ring according to claim 6, **characterised in that** the helical compression spring (3) is coated at least on the surface (3') facing towards the spring bed (5') in a predeterminable angular region (β).

10. Oil scraping piston ring according to claim 9, **characterised in that** the angular region (β) lies approximately between 5° and 180°.

11. Oil scraping piston ring according to claims 8 to 10, **characterised in that** the graphite layer (12) disposed in the angular region (β) extends in the peripheral direction over the angular region (α).

12. Oil scraping piston ring according to at least one of the claims 6 to 11, **characterised in that** the graphite layer (12) is formed as a Graphit-iC layer.

## Revendications

1. Procédé de fabrication d'un ressort de compression hélicoïdal (3) utilisable pour un segment racleur d'huile (1), par le fait qu'un fil métallique est enroulé en spirale puis est soumis à un nettoyage, et que le ressort de compression hélicoïdal (3) ainsi préparé est au moins partiellement pourvu d'une couche de graphite amorphe (12) résistante à l'usure.

2. Procédé selon la revendication 1, **caractérisé en ce que** la couche de graphite amorphe (12) est apposée sur les régions périphériques (3') à revêtir du ressort de compression hélicoïdal (3) par un processus à basse température dans des plages de température inférieures à 200°C.

3. Procédé selon la revendication 1 ou 2, **caractérisé en ce que**, avant de revêtir le ressort de compression hélicoïdal (3), la surface périphérique extérieure de ce dernier est rendue métalliquement brillante ou encore dépourvue d'oxydes, notamment est chimiquement ébavurée.

4. Procédé selon l'une des revendications 1 à 3, **caractérisé en ce que** la couche de graphite amorphe (12) est réalisée sous la forme d'une couche de graphite iC.

5. Procédé selon l'une des revendications 1 à 3, **caractérisé en ce que** la couche de graphite est apposée par le procédé de déposition physique en phase vapeur.

6. Segment racleur d'huile pour des moteurs à combustion interne, qui coopère avec un ressort de compression hélicoïdal disposé sur la face arrière du segment et exerçant une tension radialement vers l'extérieur, sachant que le ressort de compression hélicoïdal s'étend dans une rainure dans la face arrière du segment qui joue le rôle de lit de ressort, que ses extrémités de ressort se soutiennent mutuellement en direction périphérique et que le segment racleur d'huile présente un joint, **caractérisé en ce que** la surface (3') du ressort de compression hélicoïdal (3) est pourvue d'une couche de graphite amorphe (12) résistante à l'usure.

7. Segment racleur d'huile selon la revendication 6, **caractérisé en ce que** le ressort de compression hélicoïdal (3) est revêtu au moins dans la région du joint (2) dans une plage d'angle prédéfinissable (α), sachant que, dans l'état installé, les extrémités de ressort (7, 8) du ressort de compression hélicoïdal (3) font face au joint (2).

8. Segment racleur d'huile selon la revendication 6 ou 7, **caractérisé en ce que** la plage d'angle (α) est comprise entre 5° et 60°.

9. Segment racleur d'huile selon la revendication 6, **caractérisé en ce que** le ressort de compression hélicoïdal (3) est revêtu au moins sur la surface (3') tournée vers le lit de ressort (5') dans une plage d'angle prédéfinissable (β).

10. Segment racleur d'huile selon la revendication 9, **caractérisé en ce que** la plage d'angle (β) est approximativement comprise entre 5° et 180°.

11. Segment racleur d'huile selon l'une des revendications 8 à 10, **caractérisé en ce que** la couche de graphite (12) disposée dans la plage d'angle (β) s'étend, considéré en direction périphérique, sur la plage d'angle (α).

12. Segment racleur d'huile selon au moins une des revendications 6 à 11, **caractérisé en ce que** la couche de graphite (12) est réalisée sous la forme d'une couche de graphite iC.
